# EUROPEAN PATENT SPECIFICATION

(11) **EP 3 681 281 B1**
(45) Date of publication and mention of the grant of the patent: **01.04.2026**
(21) Application number: 18779929.1
(22) Date of filing: 13.09.2018
(51) Int. Cl.: A01N 43/653, A01N 25/02, A01N 25/04, A01P 3/00

(54) **COMPOSITIONS FOR CROP DEFENSE**
ZUSAMMENSETZUNGEN ZUR PFLANZENABWEHR
COMPOSITIONS POUR LA DÉFENSE DES CULTURES

(30) Priority: 14.09.2017 US 201762558567 P
(43) Date of publication of application: 22.07.2020
(73) Proprietor: AdvanSix Resins & Chemicals LLC, Parsippany, New Jersey 07054 (US)
(72) Inventor: ASIRVATHAM, Edward, Parsippany New Jersey 07054 (US); EMBLIDGE, Robert W., Parsippany New Jersey 07054 (US); ENGELMAN, Kristi, Parsippany New Jersey 07054 (US); FLORES-VASQUEZ, Jaime A., Parsippany New Jersey 07054 (US); KASHURBA, Kevin, Parsippany New Jersey 07054 (US); KEENAN, Scott R., Parsippany New Jersey 07054 (US); KWEEDER, James A., Parsippany New Jersey 07054 (US); PAPPU, Venkata Krishna Sai, Parsippany New Jersey 07054 (US); TANG, Lihao, Parsippany New Jersey 07054 (US); ZHANG, Xiawei, Parsippany New Jersey 07054 (US)
(74) Representative: Crooks, Elizabeth Caroline
(86) International application number: PCT/US2018/050818
(87) International publication number: WO 2019/055610

(56) References cited:
- EP-B1- 1 223 807
- WO-A1-2005/092953
- CN-A- 1 318 291
- CN-A- 103 420 914
- CN-A- 108 378 051
- US-A1- 2009 062 120
- US-B1- 6 255 350

## Description

### FIELD

The present invention relates to compositions for crop defense. In particular, compositions comprising a caprolactam-derived solvent selected from the group consisting of N-methylcaprolactam, N-ethylcaprolactam, N-butylcaprolactam and mixtures thereof, and a crop protective active ingredient dissolved in the caprolactam-derived solvent, wherein said crop protective active ingredient is tebuconazole.

### BACKGROUND

Some important crop protective active ingredients, or pesticides including herbicides, insecticides, and fungicides, are soluble in organic solvents, but are not soluble in water. Some important crop protective active ingredients are soluble in water, but are sensitive to water and tend to decompose over time. Such pesticides may be applied to crops in the form of an emulsion of small droplets of organic solvents that are finely dispersed in water. The droplets of organic solvents contain the pesticides.

The emulsion containing the pesticide is often formed at the time of use by combining an emulsifiable concentrate (EC) with water. In addition to the pesticide and one or more organic solvents, the EC may include an emulsifier so that the emulsion forms quickly and readily when the EC is added to water. In some cases, the nature of the solvents used in the EC results in the pesticide being suspended in the solvents, rather than dissolved in the solvents. Pesticides that are suspended in the EC, rather than dissolved in the EC, may eventually fall out of suspension, for example, in storage or transportation, particularly under low temperature conditions. The pesticides that fall out of suspension may clog application equipment nozzles and prevent the proper application of the pesticides to the crops or to the fields in which the crops are to be planted.

Thus, it is beneficial that the one or more solvents in the EC are able to readily dissolve the pesticides, especially at higher pesticide concentrations desirable in the EC. In some cases, the one or more solvents include N-methyl-2-pyrrolidone (NMP) or isophorone. NMP and isophorone are excellent solvents for many of the most difficult to dissolve pesticides. However, NMP has been found to be a reproductive toxin and isophorone is a suspected carcinogen. US2009/062120A1 discloses compositions comprising: a caprolactam-derived solvent comprising inter alia N-methylcaprolactam and N-ethylcaprolactam as part of a caprolactam Markush formula and a crop protective active ingredient which can be selected from herbicides, insecticides or fungicides dissolved in the caprolactam-derived solvent. Example 1 discloses a composition comprising tebuconazole and acetylcaprolactam. CN103420914A discloses the use of N-butylcaprolactam as a pesticide penetration promoter in pesticidal compositions. WO2005/092953A1 discloses the use of N-methylcaprolactam as solvent or co-solvent in agrochemical compositions comprising as active ingredient an insecticide, a fungicide or an herbicide. US6255350B1 discloses compositions comprising: a caprolactam-derived solvent and a crop protective active ingredient which is an herbicide; the composition is in the form of an anhydrous miniemulsion concentrate with an amount from 0.05 to 25% w/w of the crop protecting agent. CN108378051A discloses a composition comprising an herbicide such as penoxsulam, a penetration enhancer which is N-butylcaprolactam and emulsifiers. What are needed are solvents that readily dissolve pesticides and are neither reproductive toxins nor suspected carcinogens.

### SUMMARY

The present invention provides a composition including a crop protective active ingredient and a caprolactam-derived solvent that mitigates or eliminates disadvantages associated with traditional solvents. The composition may be useful applying the crop protective active ingredient to crops or to fields in which crops are to be planted. The invention relates to a composition comprising a caprolactam-derived solvent selected from the group consisting of N-methylcaprolactam, N-ethylcaprolactam, N-butylcaprolactam and mixtures thereof, and a crop protective active ingredient dissolved in the caprolactam-derived solvent, wherein said crop protective active ingredient is tebuconazole.

The caprolactam-derived solvent is selected from the group consisting of N-methylcaprolactam, N-ethylcaprolactam, N-butylcaprolactam and mixtures thereof. The concentration of the caprolactam-derived solvent may be from 5 weight percent to 50 weight percent of the composition.

The crop protective active ingredient is tebuconazole.
The concentration of the crop protective active ingredient may be from 5 weight percent to 75 weight percent of the composition.

The composition may further include an emulsifier. The emulsifier may include at least one selected from the group of ethoxylated glycerin/fatty acid esters, glycerol monooleate, glycerol dioleate, PEG alkoxylated block polymers, alkoxylated alcohols, alkoxylated alkylphenols, alkoxylated amines, alkoxylated amides, alkoxylated fatty esters, alkoxylated oils, fatty esters, alkoxylated fatty acids, sorbitan derivatives, alkylaryl sulfonates, alkylaryl sulfonic acids, carboxylated alcohol ethoxylates, alkylphenol ethoxylates, carboxylic acids, olefin sulfonates, phosphate esters, and quaternary surfactants. The concentration of the emulsifier may be from 5 weight percent to 15 weight percent of the composition.

The composition may further include a co-solvent. The co-solvent may include at least one selected from the group of C₉-C₁₂ hydrocarbon solvents, aliphatic paraffinic oils, aromatic solvents, C₉-C₁₂ aromatic solvents, chlorinated hydrocarbons, alcohols, ketones, ethers, vegetable oils, methylated vegetable oils, petroleum oils, and sugar esters of fatty acids. The concentration of the co-solvent may be from 15 weight percent to 70 weight percent of the composition.

In another form thereof, the present disclosure provides an emulsifiable concentrate including the mentioned caprolactam-derived solvent, the mentioned crop protective active ingredient dissolved in the caprolactam-derived solvent, an organic co-solvent, and an emulsifier.

**The** concentration of the crop protective active ingredient may be from 5 weight percent to 75 weight percent of the emulsifiable concentrate. The concentration crop protective active ingredient may be from 20 weight percent to 30 weight percent of the emulsifiable concentrate.

The above mentioned features of the invention, and the manner of attaining them, will become more apparent and the invention itself will be better understood by reference to the following description of the invention.

### DETAILED DESCRIPTION

Compositions and concentrates of the disclosure employ caprolactam-derived solvents. The invention relates to a composition comprising a caprolactam-derived solvent selected from the group consisting of N-methylcaprolactam, N-ethylcaprolactam, N-butylcaprolactam and mixtures thereof, and a crop protective active ingredient dissolved in the caprolactam-derived solvent, wherein said crop protective active ingredient is tebuconazole, to replace traditional solvents, such as NMP or isophorone, for example. The caprolactam-derived solvents can replace NMP or isophorone in an emulsifiable concentrate containing crop protective active ingredients. The basis of the caprolactam-derived solvents, caprolactam, has not been found to be, and is not expected to be, either a reproductive toxin or a carcinogen. In particular, N-methylcaprolactam is not considered to be either a reproductive toxin or a carcinogen. Thus, the caprolactam-derived solvents, namely N-methylcaprolactam, N-ethylcaprolactam, and N-butylcaprolactam, are significantly safer solvents than NMP and isophorone.

In addition, as shown in the example below, the caprolactam-derived solvents, namely N-methylcaprolactam, N-ethylcaprolactam, and N-butylcaprolactam, appear to be as effective as NMP and other commonly used solvents, such as methyl-5-(dimethylamino)-2-methyl-5-oxopentanoate and N-butyl-2-pyrrolidone, in dissolving crop protective active ingredients. As is known in the art, Hansen Solubility Parameters can be used to predict the effectiveness of a solvent. With respect to the dissolution of the crop protective active ingredients, one skilled in the art would expect the polarity and hydrogen bonding Hansen Solubility Parameters to be strongly predictive of the effectiveness of a solvent, with generally higher values corresponding to more effective solvents.

A comparison of the Hansen Solubility Parameters for the caprolactam-derived solvents and the some commonly used solvents is shown in Table 1 below. Surprisingly, as shown in Table 1, the polarity and hydrogen bonding Hansen Solubility Parameters for the caprolactam-derived solvents are significantly lower than those for the commonly used solvents. Thus, one skilled in the art would not expect the caprolactam-derived solvents to be as effective as NMP and other commonly used solvents.

**Table 1**

| | **Hansen Solubility Parameters** | | |
|---|---|---|---|
| **Solvent** | **Dispersion** | **Polarity** | **Hydrogen Bonding** |
| **N-methylcaprolactam** | 17.9 | **7.6** | **5.7** |
| **N-ethylcaprolactam** | 17.7 | **6.7** | **5.2** |
| **N-butylcaprolactam** | 17.5 | **4.8** | **4.6** |
| N-methyl-2-pyrrolidone | 18.0 | 12.3 | 7.2 |
| N,N-dimethyladipamide methyl ester | 17.2 | 9.7 | 9.3 |
| methyl-5-(dimethylamino)-2-methyl-5-oxopentanoate | 15.8 | 10.7 | 9.2 |

Without wishing to be bound by any theory, it is believed that because the caprolactam-derived solvents used, namely N-methylcaprolactam, N-ethylcaprolactam and N-butylcaprolactam, are polar solvents, they are able to dissolve crop protective active ingredients that include polar groups (e.g. amines, halogens, oxygen containing groups). It is further believed that because the caprolactam-derived solvents are aprotic, they will not tend to cause the crop protective active ingredients to decompose over time. The caprolactam-derived solvent may be a mixture of two or more of N-methylcaprolactam, N-ethylcaprolactam and N-butylcaprolactam.

The concentration of the caprolactam-derived solvent as a weight percentage of the composition may be as low as 5 wt. %, 8 wt. %, 10 wt. %, 11 wt. %, 14 wt. %, or 17 wt. %, or as high as 26 wt. %, 30 wt. %, 32 wt. %, 38 wt. %, 44 wt. %, or 50 wt. %, or within any range defined between any two of the foregoing values, such as 5 wt. % to 50 wt. %, 8 wt. % to 44 wt. %, 10 wt. % to 30 wt. %, 11 wt. % to 38 wt. %, 14 wt. % to 32 wt. %, or 17 wt. % to 26 wt. %, for example.

The crop protective active ingredient is tebuconazole.

The concentration of the crop protective active ingredient as a weight percentage of the composition may be as low as 5 weight percent (wt. %), 8 wt. %, 11 wt. %, 14 wt. %, 17 wt. %, or 20 wt. %, or as high as 30 wt. %, 40 wt. %, 50 wt. %, 60 wt. %, 70 wt. % or 75 wt. %, or within any range defined between any two of the foregoing values, such as 5 wt. % to 75 wt. %, 8 wt. % to 70 wt. %, 11 wt. % to 60 wt. %, 14 wt. % to 50 wt. %, 17 wt. % to 40 wt. %, or 20 wt. % to 30 wt. %, for example.

The composition may further include an organic co-solvent. The organic co-solvent may include an aromatic hydrocarbon solvent, an aliphatic hydrocarbon solvent, or any combination thereof. Such solvents can be less expensive than the caprolactam-derived solvents and thus lower the overall cost of the composition. The organic co-solvent may include C₉-C₁₂ hydrocarbon solvents, aliphatic paraffinic oils such as kerosene or refined paraffins, aromatic solvents such as xylene, C₉-C₁₂ aromatic solvents, chlorinated hydrocarbons such as chlorobenzene, alcohols such as butanol and benzyl alcohol, ketones such as cyclohexanone, and ethers such as diethylene glycol and diethoxol. The organic co-solvent may include vegetable oils, methylated vegetable oils, petroleum oils, and sugar esters of fatty acids. The organic co-solvent may include any combination of the foregoing co-solvents.

The concentration of the organic co-solvent as a weight percentage of the composition may be as low as 15 wt. %, 22 wt. %, 29 wt. %, 36 wt. %, 40 wt. %, or 43 wt. %, or as high as 50 wt. %, 55 wt. %, 60 wt. %, 65 wt. %, or 70 wt. or within any range defined between any two of the foregoing values, such as 15 wt. % to 70 wt. %, 22 wt. % to 65 wt. %, 20 wt. % to 60 wt. %, 36 wt. % to 55 wt. %, 40 wt. % to 50 wt. %, or 43 wt. % to 50 wt. %, for example.

The composition can further include an emulsifier. The emulsifier may include ethoxylated glycerin/fatty acid esters such as ethoxylated glyceryl fatty acid esters (e.g., PEG 20 glyceryl laurate, PEG 20 glyceryl oleate, PEG 20 glyceryl oleoricinoleate, and PEG 20 glyceryl stearate), sorbitan esters and ethoxylated sorbitan esters (e.g., sorbitan monolaurate and sorbitan trioleate), glycerol monooleate, glycerol dioleate, PEG alkoxylated block polymers, alkoxylated alcohols, alkoxylated alkylphenols, alkoxylated amines, alkoxylated amides, alkoxylated fatty esters, alkoxylated oils, fatty esters, alkoxylated fatty acids, alkylaryl sulfonates, alkylaryl sulfonic acids, carboxylated alcohol ethoxylates, alkylphenol ethoxylates, carboxylic acids, olefin sulfonates, phosphate esters, quaternary surfactants, and combinations thereof.

The concentration of the emulsifier as a weight percentage of the composition may be as low as 5 wt. %, 6 wt. %, 7 wt. %, 8 wt. %, or 9 wt. %, or as high as 11 wt. %, 12 wt. %, 13 wt. %, 14 wt. %, or 15 wt. %, or within any range defined between any two of the foregoing values, such as 5 wt. % to 15 wt. %, 6 wt. % to 14 wt. %, 7 wt. % to 13 wt. %, 8 wt. % to 12 wt. %, 9 wt. % to 11 wt. %, or 8 wt. % to 10 wt. %, for example.

An emulsifiable concentrate (EC) includes a caprolactam-derived solvent selected from the group consisting of N-methylcaprolactam, N-ethylcaprolactam, N-butylcaprolactam and mixtures thereof, a crop protective active ingredient which is tebuconazole, an organic co-solvent and an emulsifier. The EC may be formed by mixing together the components.

The concentration of the crop protective active ingredient as a weight percentage of the emulsifiable concentrate may be as low as 5 weight percent (wt. %), 8 wt. %, 11 wt. %, 14 wt. %, 17 wt. %, or 20 wt. %, or as high as 30 wt. %, 40 wt. %, 50 wt. %, 60 wt. %, 70 wt. % or 75 wt. %, or within any range defined between any two of the foregoing values, such as 5 wt. % to 75 wt. %, 8 wt. % to 70 wt. %, 11 wt. % to 60 wt. %, 14 wt. % to 50 wt. %, 17 wt. % to 40 wt. %, or 20 wt. % to 30 wt. %, for example.

The concentration of the caprolactam-derived solvent, which is selected from the group consisting of N-methylcaprolactam, N-ethylcaprolactam, N-butylcaprolactam and mixtures thereof, as a weight percentage of the emulsifiable concentrate may be as low as 5 wt. %, 8 wt. %, 10 wt. %, 11 wt. %, 14 wt. %, or 17 wt. %, or as high as 26 wt. %, 30 wt. %, 32 wt. %, 38 wt. %, 44 wt. %, or 50 wt. %, or within any range defined between any two of the foregoing values, such as 5 wt. % to 50 wt. %, 8 wt. % to 44 wt. %, 10 wt. % to 30 wt. %, 11 wt. % to 38 wt. %, 14 wt. % to 32 wt. %, or 17 wt. % to 26 wt. %, for example.

The concentration of the emulsifier as a weight percentage of the emulsifiable concentrate may be as low as 5 wt. %, 6 wt. %, 7 wt. %, 8 wt. %, or 9 wt. %, or as high as 11 wt. %, 12 wt. %, 13 wt. %, 14 wt. %, or 15 wt. %, or within any range defined between any two of the foregoing values, such as 5 wt. % to 15 wt. %, 6 wt. % to 14 wt. %, 7 wt. % to 13 wt. %, 8 wt. % to 12 wt. %, 9 wt. % to 11 wt. %, or 8 wt. % to 10 wt. %, for example.

The concentration of the organic co-solvent as a weight percentage of the emulsifiable concentrate may be as low as 15 wt. %, 22 wt. %, 29 wt. %, 36 wt. %, 40 wt. %, or 43 wt. %, or as high as 50 wt. %, 55 wt. %, 60 wt. %, 65 wt. %, or 70 wt. or within any range defined between any two of the foregoing values, such as 15 wt. % to 70 wt. %, 22 wt. % to 65 wt. %, 20 wt. % to 60 wt. %, 36 wt. % to 55 wt. %, 40 wt. % to 50 wt. %, or 43 wt. % to 50 wt. %, for example.

The EC can be provided to a use location, such as a farm, and diluted on-site with water to a desired application concentration (otherwise known as a tank mixture). Upon dilution with water, the emulsifier in the EC quickly and readily forms an emulsion of organic droplets finely dispersed in the tank mixture. The organic droplets include the caprolactam-derived solvent, the co-solvent, and the crop protective active ingredient.

The organic droplets are not miscible with the water, so that the crop protective active ingredient stays in solution within the organic droplets. This can provide for an even concentration of the crop protective active ingredient in the tank mixture. Once the tank mixture is prepared, the diluted EC is applied to the crops or to the fields in which the crops are to be planted. The diluted EC can be applied by, for example, spraying or dribbling on to the fields or injecting into the soil. Lines and nozzles used to apply the diluted EC are less likely to clog because the crop protective active ingredient stays in solution within the organic droplets.

### EXAMPLES

### Comparative Example 1 - Herbicide Comparative Solubility

The solubility of the herbicide saflufenacil was determined for thirteen solvents. Three of the solvents were caprolactam-derived solvents in accordance with this disclosure. The remaining ten were comparative solvents. The solubility of saflufenacil was evaluated for each solvent by preparing four, 2 ml vials containing 20 wt. %, 30 wt. %, 40 wt. % and 50 wt. % of saflufenacil. To prepare the 20 wt. % vial, 0.040 g of saflufenacil was added to 0.160 ml of solvent. To prepare the 30 wt. % vial, 0.060 g of saflufenacil was added to 0.140 ml of solvent. To prepare the 40 wt. % vial, 0.80 g of saflufenacil was added to 0.120 ml of solvent. To prepare the 50 wt. % vial, 0.100 g of saflufenacil was added to 0.100 ml of solvent. The vials were capped and swirled at room temperature until no change in solubility was observed.

The results are shown in Table 2 below. Table 2 shows the maximum weight percentage of saflufenacil dissolved in each solvent, as described above. Solvents 1-3 are in accordance with the present disclosure. Solvents 4-13 are comparative solvents. As shown in Table 2, the N-methylcaprolactam performed nearly as well as NMP, and better than any other comparative solvent.

**Table 2**

| **Saflufenacil** | | |
|---|---|---|
| **1** | **N-methylcaprolactam** | **40%** |
| **2** | **N-ethylcaprolactam** | **30%** |
| **3** | **N-butylcaprolactam** | **20%** |
| 4 | N-methyl-2-pyrrolidone | 50% |
| 5 | N-butyl-2-pyrrolidone | 30% |
| 6 | N,N-dimethyldecanamide | 30% |
| 7 | N,N-dimethyladipamide methyl ester | < 20% |
| 8 | methyl-5-(dimethylamino)-2-methyl-5-oxopentanoate | 20% |
| 9 | cyclohexanone | < 20% |
| 10 | cyclohexyl methyl ether | < 20% |
| 11 | cyclohexyl acetate | < 20% |
| 12 | cyclohexyl butyrate | < 20% |
| 13 | N-(2-cyanoethyl)caprolactam | < 20% |

### Comparative Example 2 - Insecticide Comparative Solubility

Test samples including the insecticide bifenthrin were prepared as described above for Example 1 for saflufenacil. The results are shown in Table 3 below. Table 3 shows the maximum weight percentage of bifenthrin dissolved in each solvent, as described above. As in Table 1 above, solvents 1-3 are in accordance with the present disclosure and solvents 4-13 are comparative solvents. As shown in Table 3, the N-ethylcaprolactam performed as well as NMP.

**Table 3**

| **Bifenthrin** | | |
|---|---|---|
| **1** | **N-methylcaprolactam** | **40%** |
| **2** | **N-ethylcaprolactam** | **50%** |
| **3** | **N-butylcaprolactam** | **40%** |
| 4 | N-methyl-2-pyrrolidone | 50% |
| 5 | N-butyl-2-pyrrolidone | 50% |
| 6 | N,N-dimethyldecanamide | 30% |
| 7 | N,N-dimethyladipamide methyl ester | 30% |
| 8 | methyl-5-(dimethylamino)-2-methyl-5-oxopentanoate | 30% |
| 9 | cyclohexanone | 50% |
| 10 | cyclohexyl methyl ether | 50% |
| 11 | cyclohexyl acetate | 40% |
| 12 | cyclohexyl butyrate | 40% |
| 13 | N-(2-cyanoethyl)caprolactam | < 20% |

### Example 3 - Fungicide Comparative Solubility

Test samples including the fungicide tebuconazole were prepared as described above for Example 1 for saflufenacil. The results are shown in Table 4 below. Table 4 shows the maximum weight percentage of tebuconazole dissolved in each solvent, as described above. As in Table 1 above, solvents 1-3 are in accordance with the present disclosure and solvents 4-13 are comparative solvents. As shown in Table 4, the N-methylcaprolactam and the N-ethylcaprolactam performed as well as NMP.

**Table 4**

| **Tebuconazole** | | |
|---|---|---|
| **1** | **N-methylcaprolactam** | **50%** |
| **2** | **N-ethylcaprolactam** | **50%** |
| **3** | **N-butylcaprolactam** | **40%** |
| 4 | N-methyl-2-pyrrolidone | 50% |
| 5 | N-butyl-2-pyrrolidone | 40% |
| 6 | N,N-dimethyldecanamide | 30% |
| 7 | N,N-dimethyladipamide methyl ester | 30% |
| 8 | methyl-5-(dimethylamino)-2-methyl-5-oxopentanoate | 30% |
| 9 | cyclohexanone | 40% |
| 10 | cyclohexyl methyl ether | 20% |
| 11 | cyclohexyl acetate | 20% |
| 12 | cyclohexyl butyrate | < 20% |
| 13 | N-(2-cyanoethyl)caprolactam | < 20% |

## Claims

1. A composition comprising a caprolactam-derived solvent selected from the group consisting of N-methylcaprolactam, N-ethylcaprolactam, N-butylcaprolactam and mixtures thereof, and
a crop protective active ingredient dissolved in the caprolactam-derived solvent,
wherein said crop protective active ingredient is tebuconazole.

2. The composition of claim 2, wherein a concentration of the caprolactam-derived solvent is from 5 weight percent to 50 weight percent of the composition.

3. The composition of any of claims 1 or 2, wherein a concentration of the crop protective active ingredient is from 5 weight percent to 75 weight percent of the composition.

4. The composition of any of claims 1-3, further including an emulsifier.

5. The composition of claim 4, wherein the emulsifier includes at least one selected from the group of ethoxylated glycerin/fatty acid esters, glycerol monooleate, glycerol dioleate, PEG alkoxylated block polymers, alkoxylated alcohols, alkoxylated alkylphenols, alkoxylated amines, alkoxylated amides, alkoxylated fatty esters, alkoxylated oils, fatty esters, alkoxylated fatty acids, alkylaryl sulfonates, alkylaryl sulfonic acids, carboxylated alcohol ethoxylates, alkylphenol ethoxylates, carboxylic acids, olefin sulfonates, phosphate esters, and quaternary surfactants.

6. The composition of either of claim 4 or 5, wherein a concentration of the emulsifier is from 5 weight percent to 15 weight percent of the composition.

7. The composition of any of claims 1-6, further including a co-solvent.

8. The composition of claim 7, wherein the co-solvent includes at least one selected from the group of C₉-C₁₂ hydrocarbon solvents, aliphatic paraffinic oils, aromatic solvents, C₉-C₁₂ aromatic solvents, chlorinated hydrocarbons, alcohols, ketones, ethers, vegetable oils, methylated vegetable oils, petroleum oils, and sugar esters of fatty acids.

9. The composition of either of claims 7 or 8, wherein a concentration of the co-solvent is from 15 weight percent to 70 weight percent of the composition.

## Patentansprüche

1. Zusammensetzung, umfassend ein von Caprolactam abgeleitetes Lösungsmittel ausgewählt aus der Gruppe bestehend aus N-Methylcaprolactam, N-Ethylcaprolactam, N-Butylcaprolactam und Mischungen davon, und
einen Pflanzenschutzwirkstoff, der in dem von Caprolactam abgeleiteten Lösungsmittel gelöst ist,
wobei der Pflanzenschutzwirkstoff Tebuconazol ist.

2. Zusammensetzung nach Anspruch 2, wobei die Konzentration des von Caprolactam abgeleiteten Lösungsmittels 5 Gew.-% bis 50 Gew.-% der Zusammensetzung beträgt.

3. Zusammensetzung nach Anspruch 1 oder 2, wobei die Konzentration des Pflanzenschutzwirkstoffs 5 Gew.-% bis 75 Gew.-% der Zusammensetzung beträgt.

4. Zusammensetzung nach einem der Ansprüche 1-3, die weiterhin einen Emulgator umfasst.

5. Zusammensetzung nach Anspruch 4, wobei der Emulgator mindestens ein aus der aus ethoxylierten Glycerin/Fettsäureestern, Glycerinmonooleat, Glycerindioleat, PEG-alkoxylierten Blockpolymeren, alkoxylierten Alkoholen, alkoxylierten Alkylphenolen, alkoxylierten Aminen, alkoxylierten Amiden, alkoxylierten Fettsäureestern, alkoxylierten Ölen, Fettsäureestern, alkoxylierten Fettsäuren, Alkylarylsulfonaten, Alkylarylsulfonsäuren, carboxylierten Alkoholethoxylaten, Alkylphenolethoxylaten, Carbonsäuren, Olefinsulfonaten, Phosphatestern und quartären Tensiden bestehenden Gruppe ausgewähltes Tensid umfasst.

6. Zusammensetzung nach Anspruch 4 oder 5, wobei die Konzentration des Emulgators 5 Gew.-% bis 15 Gew.-% der Zusammensetzung beträgt.

7. Zusammensetzung nach einem der Ansprüche 1-6, die weiterhin ein Cosolvens umfasst.

8. Zusammensetzung nach Anspruch 7, wobei das Cosolvens mindestens ein aus der Gruppe der C₉-C₁₂-Kohlenwasserstofflösungsmittel, aliphatischen paraffinischen Öle, aromatischen Lösungsmittel, C₉-C₁₂-aromatischen Lösungsmittel, chlorierten Kohlenwasserstoffe, Alkohole, Ketone, Ether, pflanzlichen Öle, methylierten pflanzlichen Öle, Petrolöle und Zuckerester von Fettsäuren ausgewähltes Cosolvens umfasst.

9. Zusammensetzung nach Anspruch 7 oder 8, wobei die Konzentration des Cosolvens 15 Gew.-% bis 70 Gew.-% der Zusammensetzung beträgt.

## Revendications

1. Composition comprenant un solvant dérivé de caprolactame choisi dans le groupe constitué du N-méthylcaprolactame, du N-éthylcaprolactame, du N-butylcaprolactame et de leurs mélanges et
un ingrédient actif protecteur des cultures dissous dans le solvant dérivé de caprolactame,
dans laquelle ledit ingrédient actif protecteur des cultures est le tébuconazole.

2. Composition selon la revendication 2, dans laquelle une concentration du solvant dérivé de caprolactame est de 5 pour cent en poids à 50 pour cent en poids de la composition.

3. Composition selon l'une quelconque des revendications 1 ou 2, dans laquelle une concentration de l'ingrédient actif protecteur des cultures est de 5 pour cent en poids à 75 pour cent en poids de la composition.

4. Composition selon l'une quelconque des revendications 1 à 3, comprenant en outre un émulsifiant.

5. Composition selon la revendication 4, dans laquelle l'émulsifiant comprend au moins l'un choisi dans le groupe constitué des esters de glycérine/acide gras éthoxylés, du monooléate de glycérol, du dioléate de glycérol, des polymères séquencés alcoxylés PEG, des alcools alcoxylés, des alkylphénols alcoxylés, des amines alcoxylées, des amides alcoxylés, des esters gras alcoxylés, des huiles alcoxylées, des esters gras, des acides gras alcoxylés, des alkylarylsulfonates, des acides alkylarylsulfoniques, des éthoxylates d'alcool carboxylé, des éthoxylates d'alkylphénol, des acides carboxyliques, des sulfonates d'oléfines, des esters de phosphate et des tensioactifs quaternaires.

6. Composition selon l'une ou l'autre des revendications 4 ou 5, dans laquelle une concentration de l'émulsifiant est de 5 pour cent en poids à 15 pour cent en poids de la composition.

7. Composition selon l'une quelconque des revendications 1 à 6, comprenant en outre un co-solvant.

8. Composition selon la revendication 7, dans laquelle le co-solvant comprend au moins l'un choisi dans le groupe constitué des solvants hydrocarbonés en C₉-C₁₂, des huiles paraffiniques aliphatiques, des solvants aromatiques, des solvants aromatiques en C₉-C₁₂, des hydrocarbures chlorés, des alcools, des cétones, des éthers, des huiles végétales, des huiles végétales méthylées, des huiles de pétrole et des esters de sucres d'acides gras.

9. Composition selon l'une ou l'autre des revendications 7 ou 8, dans laquelle une concentration du co-solvant est de 15 pour cent en poids à 70 pour cent en poids de la composition.
